Europäisches Patentamt

European Patent Office

Office européen des brevets

(19)

(11) Numéro de publication: **0 097 570**
**B1**

(12) **FASCICULE DE BREVET EUROPEEN**

(45) Date de publication du fascicule du brevet: **02.09.87**

(51) Int. Cl.⁴: **G 01 B 7/08, G 07 D 7/00**

(21) Numéro de dépôt: **83401174.4**

(22) Date de dépôt: **09.06.83**

(54) **Dispositif de vérification d'épaisseur de matières diélectriques en feuille.**

(30) Priorité: **22.06.82 FR 8210853**

(43) Date de publication de la demande:
**04.01.84 Bulletin 84/01**

(45) Mention de la délivrance du brevet:
**02.09.87 Bulletin 87/36**

(84) Etats contractants désignés:
**AT BE CH DE GB IT LI NL SE**

(56) Documents cités:
**DE-A-2 100 229**
**US-A-3 523 246**
**US-A-4 255 652**
**US-A-4 319 137**

(73) Titulaire: **BANQUE DE FRANCE**
**1 rue de la Vrillière B.P. 140-01**
**F-75049 Paris Cedex 01 (FR)**

(72) Inventeur: **Jeanneau, Dominique**
**115, rue de Reuilly**
**F-75012 Paris (FR)**
Inventeur: **Poilleux, Jean-Loup**
**6, Place du Président Kennedy**
**F-92170 Vanves (FR)**

Courier Press, Leamington Spa, England.

EP 0 097 570 B1

## Description

La présente invention est relative à la vérification des caractéristiques diélectriques de matériaux en feuille, et plus particulièrement à un dispositif de mesure des variations d'impédance capacitive d'un matériau en feuille, notamment de papier.

Dans de nombreuses applications, la connaissance de l'épaisseur, de la variation d'épaisseur ou de la qualité d'un papier peut servir à l'authentification de produits en feuille constitués à partir de ce papier, par exemple billets de banque, papiers fiduciaires, chèques, etc. ou au contrôle de leur état de conservation. Cette connaissance peut être efficacement obtenue à partir des caractéristiques diélectriques du matériau.

On connaît déjà des dispositifs de mesure d'épaisseur ou de variations d'épaisseur. Certains nécessitent un contact entre l'élément à contrôler et le palpeur de mesure et présentent un risque d'endommagement de cet élément quand ce dernier défile sous le palpeur. D'autres dispositifs fonctionnant sans contact, par exemple par mesures optiques, sont principalement tributaires des bandes d'absorption de l'élément à contrôler, que ce soit dans le spectre visible ou infrarouge. Les capteurs par ultra-sons sont limités par leur réponse en fréquence et ils ne peuvent être adaptés à des mesures sur de petites surfaces ou détecter de faibles variations de masse du produit à contrôler à moins d'effectuer ces mesures dans un liquide.

La présente invention repose sur la mesure de variations d'impédance capacitive d'un produit en feuille présentant une constante diélectrique supérieure à celle de l'air ou du vide.

Il a aussi été proposé de vérifier sur des billets de banque réalisés suivant la technique d'impression en taille-douce, l'épaisseur de couches d'encres de couleurs à l'aide d'un dispositif capacitif utilisant un procédé de résonance à haute fréquence, la grandeur des écarts de résonance permettant de détecter les falsifications.

Un autre dispositif capacitif connu pour vérifier l'authenticité du filigrane existant dans certains billets de banque comporte à cet effet une électrode de forme coïncidant avec le dessin du filigrane à contrôler.

Ces dispositifs connus sont d'application limitée à un type de document bien défini et nécessitent chaque fois une adaptation particulière au type de document à vérifier s'il est différent. Un tel dispositif est décrit dans le brevet allemand 2.100.229.

L'invention met à profit la détection des variations de constante diélectrique provoquées par le passage du produit à contrôler entre les armatures de condensateurs pour en tirer des informations sur les épaisseurs locales du produit et vérifier que les valeurs des épaisseurs ainsi déterminées restent conformes à celles qu'on doit s'attendre à trouver sur un produit authentique.

Le dispositif de vérification des caractéristiques diélectriques de matériaux en feuille, suivant l'invention, comporte des moyens pour faire défiler le matériau à vérifier, un oscillateur de fréquence stable, un ensemble de condensateurs formés de paires d'armatures planes ayant une configuration relative déterminée entre lesquelles passe le matériau à véfifier, chaque condensateur étant relié aux bornes dudit oscillateur à travers une résistance de charge respective:

—un ensemble de circuits d'amplification et de redressement de la tension alternative aux bornes de chacune desdites résistances de charge,

—un circuit de multiplexage ayant des entrées reliées aux sorties de l'ensemble précédent,

—des moyens de conversion analogique-numérique reliés à la sortie du circuit de multiplexage pour fournir un signal de mesure dynamique relatif à une zone de matériau passant entre les armatures d'un des condensateurs,

—une mémoire dans laquelle ont été enregistrés lesdits signaux de mesure relevés au cours du passage d'un matériau étalon et

—des moyens adaptés pour piloter l'ensemble formé par le circuit de multiplexage et les moyens de conversion en synchronisme avec les moyens de défilement, et pour effectuer une comparaison entre les signaux de mesure fournis par le convertisseur au cours de l'examen d'une zone de matériau et les signaux lus dans la mémoire relativement à la même zone de matériau étalon, et déduire par corrélation un signal de validité du matériau vérifié.

Outre la vérification de l'épaisseur d'un produit en feuille le dispositif suivant l'invention peut aussi présenter diverses applications dans le domaine des papiers fiduciaires: détection de contrefaçons utilisant un papier de même épaisseur mais de composition autre que celui normalement utilisé pour la fabrication de billets de banque ou de chèques; reconnaissance de critère d'authenticité tels que filigranes; détection du passage de deux feuilles ou billets superposés partiellement ou totalement; détection de fils de sécurité, métalliques ou non ...; détection de surépaisseur provoquée par exemple, par un ruban adhésif, une laque ou tout autre produit invisible mais produisant une modification de la constante diélectrique de l'objet ou du produit à examiner, et par conséquent, une modification de la réponse du dispositif, celle-ci étant préalablement déterminée sur un exemplaire authentique de l'objet ou du produit en feuille dont la fabrication présente une qualité spécifique propre à déceler toute contrafaçon.

Plus particulièrement, la reconnaissance d'un filigrane dans un billet de banque peut être réalisée par exploration synchrone du billet à contrôler et d'une mémoire traduisant sous forme de signaux électriques le profil du filigrane étalon de référence, par exemple une mémoire morte. Les encres présentant des constantes diélectriques très différentes de celles du papier, celles-ci n'influent pratiquement pas sur le fonctionnement du dispositif de mesure qui n'est sensible qu'aux variations de densité et/ou de masse du papier, seules capables de faire varier l'impédance capacitive de l'élément sensible du dispositif.

Un tel dispositif peut être utilisé dans l'équipement de machines automatiques de tri et de contrôle de documents, par exemple la vérification de billets de banque.

L'invention sera mieux comprise en se référant à la description suivante et au dessin annexé, donné à titre d'exemple non limitatif, qui représente plusieurs modes de réalisation d'un dispositif conforme à l'invention.

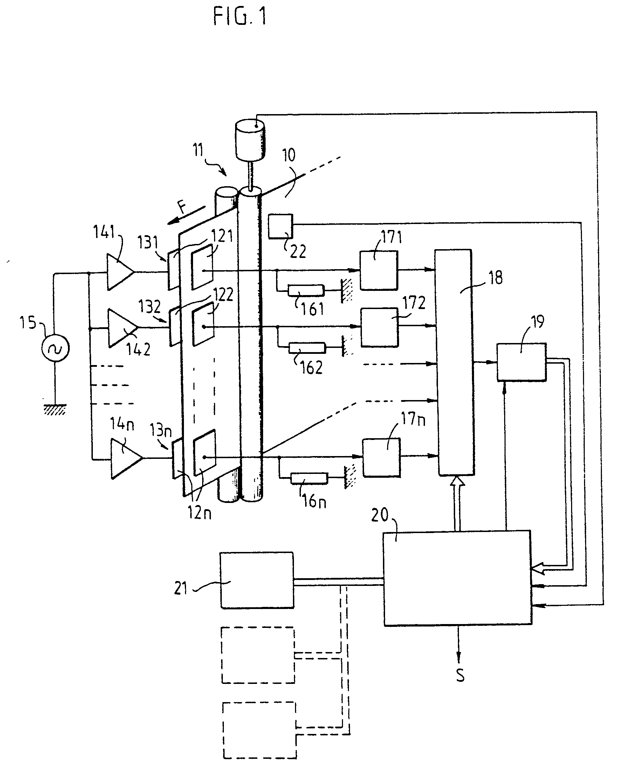

La fig. 1 représente schématiquement un premier mode de réalisation utilisant un microprocesseur.

La fig. 2 représente un autre mode de réalisation simplifié.

Sans vouloir pour cela limiter l'invention à ce seule exemple de réalisation, on va décrire un dispositif conforme à l'invention appliqué à la vérification de l'authenticité de billets de banque basée sur l'existence de filigranes.

Dans le dispositif représenté schématiquement sur le dessin, le billet à vérifier 10 est entrainé en défilement par des moyens 11, par exemple une paire de rouleaux actionnés par un moteur électrique de genre pas à pas. Le billet 10 est guidé pour passer entre un ensemble de n paires de plaques planes, par exemple rectangulaires , 121, 122, ... 12n constituant les armatures de n condensateurs 131, 132, ... 13n. Les paires de plaques 12 sont alignées, comme représenté sur le dessin, transversalement au sens de défilement du billet, ou encore décalées en quinconce. Lune des armatures 12n de chaque condensateur 13n est reliée par l'intermédiaire d'un amplificateur 14n, à une borne d'un oscillateur 15 à fréquence stabilisée, par exemple de l'ordre de 1 MHz, dont l'autre borne est mise à la masse. L'autre armature 12n de chaque condensateur 13n est reliée à la masse à travers une résistance de charge 161, 162, ... 16n et le point de jonction entre cette armature et la borne adjacente de la résistance 16n est connectée, par l'intermédiaire d'un circuit 171, 172, ... 17n d'amplification et de redressement, à l'une des entrées d'un dispositif de multiplexage 18, chaque condensateur 13n constituant ainsi l'élément sensible d'une voie de mesure branchée à l'une des entrées du multiplexeur.

la sortie du multiplexeur 18 est reliée à un convertisseur analogique-numérique 19 fournissant un signal de mesure numérique par exemple à huit bits. Un calculateur 20, tel qu'un microprocesseur, reçoit d'une part un signal de lecture d'une (ou plusieurs) mémoire 21, par exemple une mémoire morte, dans laquelle ont été enregistrés des signaux de mesure élaborés préalablement au cours de l'examen dans le dispositif d'un billet authentique servant d'étalon de référence. Le calculateur 20 reçoit par ailleurs un signal de début de document fourni par un capteur de proximité 22 monté sur le trajet du billet et détectant le passage de son bord avant, ainsi que des impulsions de synchronisation représentatives du déplacement du billet et fournies par exemple par le moteur pas à pas des moyens d'entrainement 11. Ces derniers signaux sont, après totalisation, représentatifs de l'emplacement des zones du billet 10 passant entre les condensateurs 13 et servent au pilotage du multiplexeur 18 et du convertisseur 19, ainsi qu'à l'adressage des zones correspondantes de la mémoire 21. L'unité centrale du calculateur 20 est programmé pour effectuer une comparaison entre les signaux de mesure que lui fournit le convertisseur 19 d'une part, et les signaux de lecture issus de la mémoire 21 d'autre part, et en déduire par corrélation un signal de décision concernant la validité ou non-validité du billet 10 examiné par le dispositif.

Ce dispositif fonctionne de la manière suivante: on suppose qu'au cours d'une phase d'initialisation la mémoire 21 a été chargée de signaux de mesure relevés au passage d'un billet étalon authentique présentant un ou plusieurs filigranes en des emplacements déterminés. On admet que l'introduction du billet 10 provoque par fermeture d'un contact la mise sous tension du dispositif et la mise en route des moyens d'entrainement 11 qui déplacent le billet suivant la flèche F. Le board avant du billet est détecté par le capteur de proximité 22 et cette détection provoque l'ouverture d'une porte logique dans le calculateur 20, autorisant la réception des impulsions émises par le moteur d'entrainement pas à pas dont le nombre est représentatif de l'avancement du billet 10 par rapport au capteur de proximité.

Quand le billet 10 pénètre dans la zone des condensateurs 13, l'épaisseur de papier variable avec la présence de filigranes modifie la constante diélectrique et par suite la charge individuelle de ces condensateurs au fur et à mesure que le billet défile entre leurs armatures, donnant ainsi naissance à un courant variable dans chacune des résistances 16. Les tensions aux bornes des différentes résistances 161, 162, ... 16n sont amplifiées, puis redressées dans leurs circuits correspondants 171, 172, ... 17n. Le multiplexeur 18 sous la commande du calculateur 20 échantillonne successivement les n voies de mesure en fonction de la progression du billet 10 et les signaux analogiques de chaque voie de mesure ainsi prélevés sont convertis en numérique par le convertisseur 10 déclenché en synchronisme par le calculateur 20 avant d'être appliqués sur celui-ci. Simultanément, le calculateur explore dans la mémoire 21 les zones renfermant les signaux de mesure homologues enregistrés sur le billet étalon et d'adresses correspondant à ceux disponibles à la sortie du convertisseur 19 en fonction de la liaison établie par le multiplexeur 18 à cet instant.

Le calculateur effectue une comparaison entre les signaux de mesure et les signaux lus dans la mémoire et par application d'une fonction de corrélation, décide si le billet contrôlé doit être considéré comme authentique, ou rejeté comme étant contrefait en émettant un signal de décision logique S.

Pour permettre au dispositif de vérifier l'authenticité ou l'état de conservation (présence de ruban adhésif, déchirures, trous, cornes, etc.) de plusieurs documents, par exemple de billets de banque de valeurs différentes, le calculateur peut être associé à plusieurs mémoires mortes 21 chacune affectée à la mémorisation de signaux spécifiques d'un type de billet, un pupitre de commande permettant de sélectionner la mémoire à mettre en service suivant le type de billet à contrôler.

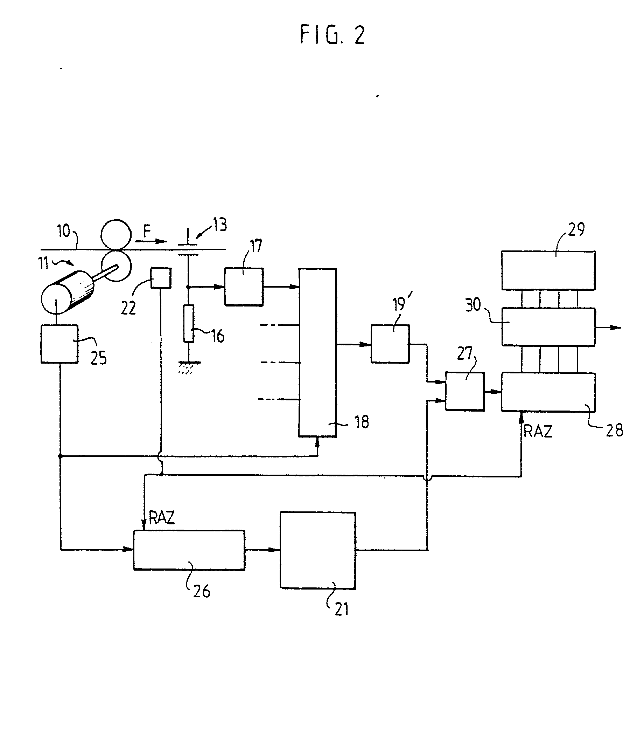

Le mode de réalisation qui vient d'être décrit fait appel à un calculateur ou un microprocesseur pour piloter l'exploration synchrone du billet à contrôler et de la mémoire constituant le document de référence. Une solution plus simple consiste à utiliser les impulsions émises par le moteur pas à pas de l'exemple précédent, ou tout autre capteur de déplacement du billet, pour commander directement en synchronisme l'avancement du dispositif de multiplexage d'une part, l'exploration de la mémoire d'autre part. Dans ce cas les moyens de conversion analogique-numérique peuvent être remplacés par un convertisseur analogique-logique tel qu'un circuit à seuil, par exemple un trigger de Schmitt. La fig. 2 représente schématiquement ce mode de réalisation simplifié du dispositif. On comprend cependant qu'un convertisseur analogique-logique n'est qu'un mode particulier de réalisation de moyens de conversion analogique-numérique dans lequel chaque échantillon du signal prend la valeur numérique zéro ou un.

Les organes 10 à 18, 21 et 22 sont analogues à ceux de la figure précédente et branchés de la même façon. Un capteur de déplacement 25 faisant partie des moyens d'entraînement 11 du billet fournit des impulsions de synchronisation qui sont appliquées d'une part sur l'entrée de commande du multiplexeur 18, d'autre part sur un compteur d'impulsions 26, éventuellement associé à des décodeurs reliés à la mémoire 21 et déterminant les adresses successives des cellules de mémoire à lire en relation avec la zone du billet passant dans le condensateur 13 mis au même instant en liaison avec la sortie du multiplexeur 18. La sortie de ce multiplexeur est reliée par l'intermédiaire d'un circuit à seuil 19', tel que par exemple un trigger de Schmitt, à l'une des entrées d'un comparateur logique 27. La seconde entrée de ce comparateur est reliée à la sortie de lecture de la mémoire 21. La sortie du comparateur 27 est reliée à l'entrée d'un compteur d'impulsions 28 dont les sorties sont reliées à l'entrée d'un compteur d'impulsions 28. Les sorties du compteur 28 sont reliées à une première série d'entrées d'un comparateur numérique 30 ayant une seconde série d'entrées reliées aux étages d'un registre 29 dans lequel a été mémorisé un nombre prédéterminé représentant le nombre minimal de coincidences devant être atteint pour que le billet à contrôler soit validé.

Ce dispositif simplifié fonctionne de la façon suivante. On suppose que les compteurs 26 et 29, ainsi que le multiplexeur 18, ont été initialement mis à zéro, par exemple par le signal issu du détecteur de bord avant 22. La première impulsion de synchronisation émise alors par la capteur 25 déclenche le processus d'exploration du billet, et autorise par ouverture d'une porte, l'émission des impulsions de synchronisation.

Le signal de mesure représentatif de l'épaisseur du billet dans la zone explorée par le premier condensateur 131 est comparée au seuil d'amplitude fixé par le circuit 19' qui fournit à sa sortie un signal logique à bas ou haut niveau, 0 ou 1, représentant l'information de mesure. Simultanément le compteur 26 détermine l'adresse correspondante de la mémoire 21 renfermant l'information à lire du billet étalon. Ces deux informations, appliquées sur les entrées du comparateur 27 fournissent, si elles sont identiques, une impulsion de sortie qui est totalisée dans le compteur 28. Le processus se poursuit de façon analogue sous la commande des impulsions du capteur 25. Si au cours de l'exploration du billet le nombre contenu dans le compteur 28 atteint la valeur du nombre mémorisé dans le registre 29, le comparateur 30 bascule et émet un signal de validation du billet. Dans le cas contraire, le comparateur 30 reste dans son état initial et continue à émettre un signal de rejet.

La disposition relative des condensateurs n'est pas nécessairement alignée comme dans l'exemple de réalisation décrit ci-dessus, mais peut être adaptée en fonction des emplacements et de leurs tolérances où des variations d'épaisseur existent.

Les dimensions des condensateurs sont choisies pour assurer une définition compatible avec les détails des surépaisseurs à examiner.

**Revendications**

1. Dispositif de vérification des caractéristiques diélectriques de matériaux en feuille, notamment pour la vérification des filigranes de billets de banque qui comporte:
— des moyens (11) pour faire défiler le matériau à vérifier (10), un oscillateur (15) de fréquence stable;
— un ensemble de condensateurs (131, 132, ...) formés de paires d'armatures planes (121, 122, ...) ayant une configuration relative déterminée entre lesquelles passe le matériau à vérifier, chaque condensateur (13) étant relié aux bornes dudit oscillateur (15) à travers une résistance de charge (16; 161, 162, ...16n) respective:
— un ensemble de circuits (17; 171, 172, ...) d'amplification et de redressement de la tension alternative aux bornes de chacune desdites résistances de charge (16),
— un circuit de multiplexage (18) ayant des entrées reliées aux sorties de l'ensemble précédent,
— des moyens de conversion analogique-numérique (19, 19') reliés à la sortie du circuit de multiplexage (18) pour fournir un signal de mesure dynamique relatif à une zone de matériau (10) passant entre les armatures (12) d'un des condensateurs (13),
— une mémoire (21) dans laquelle ont été enregistrés lesdits signaux de mesure relevés au cours du passage d'un matériau étalon, et

—des moyens (20, 22 et 22, 25 à 29) adaptés pour piloter l'ensemble formé par le circuit de multiplexage (18) et les moyens de conversion (19; 19') en synchronisme avec les moyens de défilement (11), et pour effectuer une comparaison entre les signaux de mesure fournis par les moyens de conversion (19, 19') au cours de l'examen d'une zone de matériau (10) et les signaux lus dans la mémoire (21) relativement à la même zone de matériau étalon, et déduire par corrélation un signal de validité (S) du matériau (10) vérifié.

2. Dispositif suivant la revendication 1, où lesdits moyens de conversion comprenent un circuit à seuil (19'), et lesdits moyens de pilotage comportent un détecteur (22) du bord avant du matériau à vérifier (10) apte à déclencher un émetteur d'impulsions de pilotage (25) représentatives du défilement dudit matériau, lesdites impulsions étant utilisées pour commander l'avancement du circuit de multiplexage (18) et le circuit d'adressage (26) de la mémoire (21).

3. Dispositif suivant la revendication 1 qui comporte des moyens pour élaborer des impulsions de pilotage en synchronisme avec l'avance dudit matériau, et un microprocesseur (20) sur lequel sont appliquées les impulsions de pilotage et programmé pour effectuer, sous la commande desdites impulsions, une lecture des emplacements de mémoire (21) correspondants et une corrélation des signaux de lecture avec les signaux de mesure reçus des moyens de conversion analogique-numérique (19).

**Patentansprüche**

1. Einrichtung zur Überprüfung der dielektrischen Eigenschaften von blattförmigen Materialien, insbesondere für die Überprüfung der Wasserzeichen von Banknoten, die folgendes einschliesst:

—Mittel (11), um das zu überprüfende Material (10) fortzubewegen, einen frequenzstabilisierten Oszillator (15);

—einen Satz von Kondensatoren (131, 132, ...) bestehend aus flachen Belagpaaren (121, 122, ...), die eine bestimmte relative Konfiguration aufweisen und zwischen denen das zu überprüfende Material durchläuft, wobei jeder Kondensator (13) an die Klemmen des besagten Oszillators (15) über einen entsprechenden Ladewiderstand (16, 161, 162 ... 16n) angeschlossen ist;

—einen Satz Schaltungen (17, 171, 172, ...) für die Verstärkung und die Gleichrichtung der Wechselspannung an den Klemmen eines jeden der vorgenannten Ladewiderstände (16),

—eine Multiplexierschaltung (18), deren Eingänge an die Ausgänge der vorgenannten Einheit angeschlossen sind;

—Analog-Digital-Umsetzmittel (19, 19'), die an den Ausgang der Multiplexierschaltung (18) angeschlossen sind, um ein dynamisches Messignal in Bezug auf einen Materialbereich (10), der zwischen den Belegungen (12) eines der Kondensatoren (13) passiert, zu liefern;

—einen Speicher (21), in dem die besagten Messignale, die beim Durchlaufen eines Mustermaterials erhalten wurden, abgespeichert sind, sowie

—Mittel (20 22 und 22, 25 bis 29), die dazu geeignet sind, die von der Multiplexierschaltung (18) und den Umsetzmitteln (19, 19') gebildete Gesamtheit synchron mit den Fortbewegungsmitteln (11) zu steuern, und um einen Vergleich vorzunehmen zwischen den von den Umsetzmitteln (19, 19') bei der Untersuchung eines durchlaufenden Materialbereichs (10) gelieferten Messignalen und den Signalen, die dem gleichen Bereich des Mustermaterials entsprechen und die im Speicher (21) abzulesen sind, sowie um daraus korrelativ ein Gültigkeitssignal (S) für das überprüfte Material (10) abzuleiten.

2. Einrichtung nach Anspruch 1, wo die besagten Umsetzmittel eine Schwellenwertschaltung (19') umfassen, und die besagten Steuermittel einen Detektor (22) für die Anzeige der Vorderkante des zu überprüfenden Materials (10) besitzen, so dass ein Steuerimpulssender (25), dessen Impulse repräsentativ für den Durchgang des besagten Materials sind, ausgelöst wird, wobei diese Impulse für das Vorwärtssteuern der Multiplexierschaltung (18) und die Steuerung der Adressierschaltung (26) des Speichers (21) benutzt werden.

3. Einrichtung nach Anspruch 1, die Mittel für die Generierung von Steuerimpulsen im Synchronismus mit dem Durchgang des besagten Materials und einen Mikroprozessor (20) besitzt, wobei letzterer die Steuerimpulse erhält und dazu programmiert ist, unter der Steuerung der besagten Impulse die entsprechenden Speicherbereiche (21) abzulesen und eine Korrelation zwischen den abgelesenen Signalen und den von den Analog-Digital-Umsetzmitteln (19) erhaltenen Messignalen eine Korrelation herzustellen.

**Claims**

1. Device for testing the dielectric properties of sheet materials, especially for testing banknote watermarks, comprising:

—means (11) for moving the material to be tested (10), an oscillator (15) with a stable frequency;

—a set of capacitors (131, 132 etc.) formed of pairs of flat foils (121, 122, etc.) with a relative determined configuration, between which the material to be tested passes, each capacitor (13) being connected to the terminals of the said oscillator (15) through a load resistor (16, 161, 162 ... 16n) respectively;

—a set of circuits (17; 171, 172, etc.) to amplify and rectify the ac voltage at the terminals of each of the said low resistors (16);

—a multiplexing circuit (18) with its inputs connected to the outputs of the foregoing unit;

—means of analog-to-digital conversion (19, 19') connected to the output of the multiplexing circuit (18) to generate a dynamic measurement signal relative to a zone of material (10) passing between the foils (12) of one of the capacitors (13);

—a memory (21) which records the said measurement signals read during the passage of a standard material, and

—means (20, 22 and 22, 25 and 29) adapted to control the combination formed by the multiplexing circuit (18) and the means of conversion (19; 19') synchronised with the means of travel (11), to make a comparison between the measurement signals generated by the means of conversion (19, 19') during the examination of a zone of material (10) and the signals read in memory (21) relative to the same zone of standard material and, to determine by correlation a validity signal (S) of the tested material (10).

2. Device according to claim 1, where the said means of conversion include a threshold circuit (19'), and the said means of control comprises a detector (22) of the front edge of the material to be tested (10) able to trigger a transmitter of control pulses (25) representative of the travel of the said material, the said pulses being used to control the advance of the multiplexing circuit (18) and the addressing circuit (26) of the memory (21).

3. Device according to claim 1, comprising means to generate control pulses synchronised with the advance of the said material, and a microprocessor (21) to which the control pulses are applied, programmed to carry out, under the control of the said pulses, a reading of the corresponding memory locations (21) and a correlation of the reading signals with the measurement signals received from the means of analog-to-digital conversion (19).

# FIG. 1

FIG. 2